# EUROPEAN PATENT SPECIFICATION

(11) **EP 4 093 009 B1**
(45) Date of publication and mention of the grant of the patent: **16.04.2025**
(21) Application number: 21174369.5
(22) Date of filing: 18.05.2021
(51) Int. Cl.: B60R 11/04, H04N 23/51, H04N 23/52, H04N 23/57

(54) **AN IMAGING SYSTEM FOR A MOTOR VEHICLE**
BILDGEBUNGSSYSTEM FÜR EIN KRAFTFAHRZEUG
SYSTÈME D'IMAGERIE POUR VÉHICULE À MOTEUR

(43) Date of publication of application: 23.11.2022
(73) Proprietor: Magna Electronics Sweden AB, 447 37 Vårgårda (SE)
(72) Inventor: ROSENLUND, Erik, 583 30 Linköping (SE)
(74) Representative: Müller Verweyen

(56) References cited:
- EP-A1- 3 379 330
- US-A1- 2018 287 306

## Description

The invention relates to an imaging system for a motor vehicle.

An imaging system for a motor is known for example from the EP 2 942 939 A1, wherein the imaging system comprises a camera mounting part and at least one camera module to be mounted to said camera mounting part. The camera module comprises a lens objective, a lens holder holding said lens objective, an image sensor and a back plate holding said image sensor. The camera module is attached by rotation locking means.

Another imaging system for a motor vehicle is known for example from the EP 3 379 330 A1, with a camera mounting part and a camera module mounted to said camera mounting part. The camera module is provided with a radially outwardly directed protrusion and a retainer ring, wherein the retainer ring comprises a first ring element made from a rigid material and a second ring element made from a flexible material. The retainer ring is attached by pushing it over the protrusion under elastic deformation of the second ring element made from the flexible material to an attachment position, wherein the camera module is attached to the camera mounting part by being clamped to the camera mounting part when the retainer ring is in the attachment position.

US 2018/287306 A1 discloses a camera for a motor vehicle with a housing configured to shield electromagnetic radiation.

With respect to the prior art, it is the object of this invention to provide an imaging system in which the attachment of a camera module to a camera mounting part is further improved.

The invention solves the problem with the subject matter of the independent claims.

According to the invention an imaging system for a motor vehicle is proposed, as set out in claim 1, comprising a camera mounting part, at least one camera module to be mounted to said camera mounting part and a retainer ring. The camera module is provided with at least one radially outwardly directed protrusions. The retainer ring has multiple elastically deformable spring tongues. Further, the retainer ring is attachable by pushing it over the at least one protrusions under elastic deformation of the spring tongues to an attachment position. Said spring tongues clamp the camera module radially in the attachment position, wherein the tips of at least three spring tongues axially adjoin a surface of the at least one protrusion in the attachment position. The retainer ring has multiple spring elements applying an axially spring force from said camera mounting part to the tips of the at least three spring tongues in the attachment position.

Accordingly, the spring force applied by the retainer ring in the attachment position pushes the surface of the protrusion of the camera module away from the camera mounting part. This spring force pushes axially, thus preferably in alignment with the optical axis of the camera module. The axial spring force is preferably mainly generated through elastic deflection of the spring elements, wherein the spring tongues have far less deflection in this direction due to axial loads respectively due to the axial spring force. Thus, in the attachment position the spring tongues apply a radially inward directed spring force, which is perpendicular to the optical axis, in order to clamp preferably a barrel shaped part of the camera module and transfer the axial spring force from the spring elements towards the at least one protrusion of the camera module.

In order to transfer the axial spring force, the tips of at least three spring tongues are adjoin to a surface of the at least one protrusion, preferably a surface of the at least one protrusion facing the surface of the camera mounting part, and are in contact. Having three tips in contact with the at least one protrusion allows a stable positioning in the attachment position without tilting the camera module.

It is further suggested that all tips of the spring tongues axially adjoin a surface of the at least one protrusion. This allows a wider spread load transfer area of the axial spring load and an easier mounting process.

Preferably, the part of the camera module with the protrusion is put through a hole in the camera mounting part before pushing the retainer ring over the at least one protrusion. Accordingly, the part of the camera module without said protrusion is preferably not put through the hole of the camera mounting part and remains on the side of the camera mounting part opposite to the side designated for the retainer ring. Preferably, the remaining part of the camera module abuts the camera mounting part, and provides a counter bearing.

The assembly of the imaging system, which locks the camera module in place, can be inspected and verified easily, e.g. through visual inspection. Furthermore, the dimensions of the retainer ring can be verified in advance of the assembly. The retainer ring can be preferably made of one material only, which reduces complexity and costs of the imaging system. In general, a more robust design of an imaging system can be achieved.

The risk of deforming or damaging the spring elements during assembly, for example, is reduced by limiting the maximum deflection of the spring element by a limit stop when the base ring comes into contact with the camera mounting part.

It is further suggested that the spring tongues have an angle to the optical axis of the camera module smaller than 45°, preferably smaller than 30° in the attachment position. This reduces the deflection of the spring tongues due to axial loads, so that the axial spring loads can be provided by the spring elements in a more precise way.

Furthermore, it is preferred that the retainer ring is made of an electrically conductive material. Such a retainer ring can provide an electromagnetic shielding between the camera mounting part and camera module, achieving a second function besides ensuring pressure between the camera module and the camera mounting part. This further improves the attachment of a camera module to a camera mounting part.

It is further preferred that the retainer ring forms an electrical connection between the camera module and the camera mounting part. This ensures a tight electromagnetic shielding of the imaging system and removes the need for an electric contact elsewhere. The connection is made over the entire circumference, with the openings in the retainer ring, e.g. between spring tongues and/or spring elements, being so small that the relevant electromagnetic radiation is contained or shielded. To ensure sufficient connection between these parts the connection area is minimized thus ensuring a higher surface pressure.

According to a further preferred embodiment said electrically conductive material is a metal and/or an alloy, preferably a spring steel. This way the imaging system has a very low sensitivity to aging, to different temperatures and to temperature changes. Further on, the imaging system is enabled with a stable performance over time and over the normal usage temperatures. A low sensitivity to humidity changes can be achieved as well and the retainer ring has very low variations in dimensions over its lifetime.

According to the invention the spring tongues are arranged at an inner diameter of a basis ring of said retainer ring. This enables the use of low-cost manufacturing techniques, like stamping.

Further, according to the invention the spring elements are arranged at an outer diameter of a basis ring of said retainer ring. This also enables the use of low-cost manufacturing techniques, like stamping.

Furthermore, it is preferred that said spring tongues extent axially to a first side of the retainer ring. Axially refers to the optical axis of the camera module or an axis parallel thereto, wherein the retainer ring is preferably provided around said optical axis in the attachment position.

In a preferred embodiment said spring elements extent axially to a second side of the retainer ring. Thus, the mechanical connection between the camera module and the camera mounting part can be spring loaded axially in the attachment position.

The retainer ring is preferably provided around said optical axis in the attachment position, and axially refers to the optical axis of the camera module or an axis parallel thereto.

According to a preferred embodiment, the tips of the spring tongues have backbends directed radially outward. The backbends provide rounded surfaces of the spring tongues which are in contact with the camera module during assembly and in the attachment position. The rounded surface minimizes the risk of scratches on the camera module due to sharp edges. Further on, the tips of spring tongues are thus in a better position for locking with the surface of the at least one protrusion.

In a further preferred embodiment beads are provided in the backbends of said tips of the spring tongues. The beads increase the stiffness of the tips of the spring tongues, which can be especially beneficial under compression loads in the attachment position.

Furthermore, it is proposed that the retainer ring is a one-piece design. This allows an easy and cost-efficient production of the retainer ring with reduced complexity of the imaging system.

In a preferred embodiment the retainer ring is a closed ring. The closed ring enables higher clamping forces of the spring tongues to the camera module. A higher dimensional stability of the retainer ring can be achieved.

Furthermore, the retainer ring is preferably formed as a stamped sheet. The retainer ring can therefore be made rapidly out of sheet metal.

In the following the invention shall be illustrated on the basis of preferred embodiments with reference to the accompanying drawings, wherein:
- Fig. 1: shows an imaging system with a camera mounting part, a camera module and a retainer ring;
- Fig. 2: shows an imaging system in a cross-sectional view;
- Fig. 3: shows a retainer ring in a cross-sectional view;
- Fig. 4: shows a camera mounting part and a camera module in a cross-sectional view;
- Fig. 5: shows a retainer ring during an assembly process.

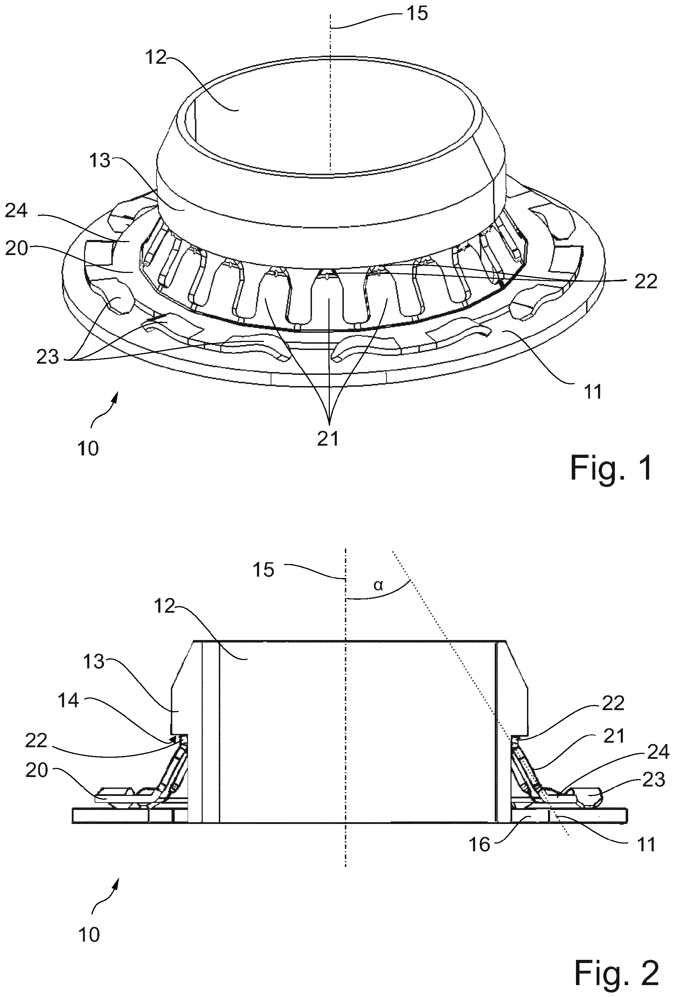

In Fig. 1 a preferred embodiment of an imaging system 10 for a motor vehicle is shown, wherein the figure is simplified and only a part of the imaging system 10 is shown.

The imaging system 10 comprises a camera mounting part 11 and a camera module 12 mounted to said camera mounting part 11. The camera module 12 has an optical axis 15 and extents through a hole 16, see Fig. 2, in the camera mounting part 11. The camera module 12 has a circular outwardly directed protrusion 13. The protrusion 13 has a slope and/or bevel in the direction pointing away from the camera mounting part 11. The protrusion 13 has a surface 14, which is facing towards the camera mounting part 11.

A retainer ring 20 has been pushed over the protrusion 13 and is shown in an attachment position. In the attachment position the camera module 12 has a fixed position with respect to the camera mounting part 11. The retainer ring 20 has a basis ring 24, wherein multiple spring tongues 21 extent radially inward and axially away from the camera mounting part 11 from the basis ring 24. Further on, multiple spring elements 23 are provided radially outward of the basis ring 24 and extent axially towards the camera mounting part 11 from the basis ring 24. The spring elements 23 have a bow which is bent away from the camera mounting part 11. The spring elements 23 further extent along the circumference, wherein two spring elements 23 share the same basis and form a pair in this embodiment.

The spring tongues 21 clamp the camera module 12 below the protrusion 13 in the attachment position. The tips 22 of the spring tongues 21 are in contact with the lower surface 14 of the protrusion 13 which faces the camera mounting part 11. Thus, an axial spring force pushes the protrusion 13 of the camera module 12 upward, which is countered by a counter bearing below the hole 16 of the camera mounting part 11, not shown. The spring elements 22 are also in contact with a lower barrel shaped part of the camera mounting part 11 and are elastically deflected in the attachment position.

The retainer ring 20 is a closed ring which is clipped between the protrusion 13 and the camera mounting part 11. The retainer ring 20 is made of spring steel in a one-piece design. Therefore, the retainer ring 20 can be made from a metal sheet in a cost-effective way. An electromagnetic shielding can be provided by the retainer ring 20, increasing the electromagnetic compatibility of the imaging system 10. An electric connection, e.g. ground, between the camera module 12 and the camera mounting part 11 is provided by the retainer ring 20 in this embodiment.

In Fig. 2 a cross-sectional view of the imaging system 10 is shown. The basis ring 24 and the camera mounting part 11 are spaced apart, wherein the spring elements 23 are in contact with the camera mounting part 11.

The spring tongues 21 are bent away from the camera mounting part 11 and clamp the cylindrical part of the camera module 12 in the attachment position. In this position the spring tongues 21 have an angle α to the optical axis 15 of the camera module 12 smaller than 45°, for example 30°.

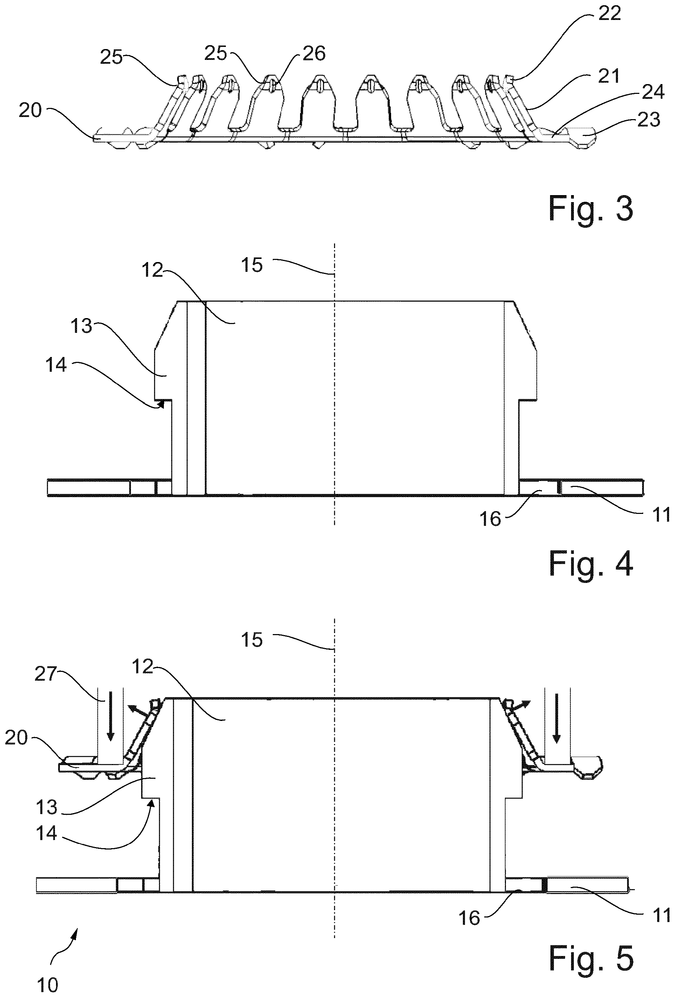

Fig. 3 shows a retainer ring 20 in a cross-sectional view. The tips 22 of the spring tongues 21 have backbends 25, so that the edges of the spring tongues 21 are not in a radial contact with the camera module 12 reducing the possibility of scratching during the mounting process or assembly process. The backbends 25 are further provided with a bead 26 each which stabilizes the backbends 25.

Fig. 4 and Fig. 5 show an imaging system 10 during an assembly process. In Fig. 4 the part of the camera module 12 with the protrusion 13 has been put through the hole 16 of the camera mounting part 11 from below. The lower part of the camera module 12 below the camera mounting part 11 is not shown. The protrusion 13 has a circular shape with a diameter smaller than the hole 16 which has also a circular shape in this embodiment.

Fig. 5 shows the assembly of the imaging system 10, wherein the retainer ring 20 is pushed down with a cylindrical mounting tool 27 over the protrusion 13 until the retained ring 20 is clipped below the protrusion 13 and the tips 22 of the spring tongues 21 are in contact with the surface 14 of the protrusion 13. The spring elements 23 are compressed during the assembly and when releasing the mounting tool 27 the spring elements 23 create a spring force between the camera module 12 and the camera mounting part 11 in the direction of the optical axis 15. Then, the spring tongues 21 act as a locking mechanism. During assembly the retainer ring 20 can be pressed down by the mounting tool 27 until the base ring 24 and the camera mounting part 11 are in contact. Thus, it is not possible to press the retainer ring 20 too hard and plastically deform the spring elements 23. When the mounting tool 27 is removed the base ring 24 and camera mounting part 11 are spaced apart in the attachment position.

## Claims

1. An imaging system (10) for a motor vehicle, comprising
- a camera mounting part (11), at least one camera module (12) to be mounted to said camera mounting part (11) and a retainer ring (20), wherein
- the camera module (12) is provided with at least one radially outwardly directed protrusions (13),
**characterized in that**
- the retainer ring (20) has multiple elastically deformable spring tongues (21), and
- the spring tongues (21) are arranged at an inner diameter of a basis ring (24) of said retainer ring (20),
- the retainer ring (20) is attachable by pushing it over the at least one protrusions (13) under elastic deformation of the spring tongues (21) to an attachment position, wherein
- said spring tongues (21) clamp the camera module (12) radially in the attachment position, wherein
- the tips (22) of at least three spring tongues (21) axially adjoin a surface (14) of the at least one protrusion (13) in the attachment position, and wherein
- the retainer ring (20) has multiple spring elements (23) applying an axially spring force from said camera mounting part (11) to the tips (22) of the at least three spring tongues (21) in the attachment position,
- the spring elements (23) are arranged at an outer diameter of the basis ring (24).

2. An imaging system (10) according to claim 1, wherein
- the spring tongues (21) have an angle (α) to an optical axis (15) of the camera module (12) smaller than 45° in the attachment position.

3. An imaging system (10) according to any one of the preceding claims, wherein
- the retainer ring (20) is made of an electrically conductive material.

4. An imaging system (10) according to claim 3, wherein
- the retainer ring (20) forms an electrical connection between the camera module (12) and the camera mounting part (11).

5. An imaging system (10) according to claim 3 or 4, wherein
- said electrically conductive material is a metal and/or an alloy, preferably spring steel.

6. An imaging system (10) according to any one of the preceding claims, wherein
- said spring tongues (21) extent axially to a first side of the retainer ring (20).

7. An imaging system (10) according to any one of the preceding claims, wherein
- said spring elements (23) extent axially to a second side of the retainer ring (20).

8. An imaging system (10) according to any one of the preceding claims, wherein
- the tips (22) of the spring tongues (21) have backbends (25) directed radially outward.

9. An imaging system (10) according to claim 8, wherein
- beads (26) are provided in the backbends (25) of said tips (22) of the spring tongues (21).

10. An imaging system (10) according to any one of the preceding claims, wherein
- the retainer ring (20) is a one-piece design.

11. An imaging system (10) according to any one of the preceding claims, wherein
- the retainer ring (20) is a closed ring.

12. An imaging system (10) according to any one of the preceding claims, wherein
- the retainer ring (20) is formed as a stamped sheet.

## Patentansprüche

1. Ein Bildaufnahmesystem (10) für ein Kraftfahrzeug, umfassend
- ein Kameramontageteil (11), mindestens ein Kameramodul (12), das an dem Kameramontageteil (11) zu montieren ist, und einen Haltering (20), wobei
- das Kameramodul (12) mit mindestens einem radial nach außen gerichteten Vorsprung (13) versehen ist,
**dadurch gekennzeichnet, dass**
- der Haltering (20) mehrere elastisch verformbare Federzungen (21) aufweist, und
- die Federzungen (21) an einem Innendurchmesser eines Basisrings (24) des Halterings (20) angeordnet sind,
- der Haltering (20) durch Aufschieben über den mindestens einen Vorsprung (13) unter elastischer Verformung der Federzungen (21) in eine Befestigungsposition befestigbar ist, wobei
- die Federzungen (21) das Kameramodul (12) in der Befestigungsposition radial festklemmen, wobei
- die Enden (22) von mindestens drei Federzungen (21) in der Befestigungsposition axial an eine Oberfläche (14) des mindestens einen Vorsprungs (13) angrenzen, und wobei
- der Haltering (20) mehrere Federelemente (23) aufweist, die eine axiale Federkraft von dem Kameramontageteil (11) auf die Enden (22) der mindestens drei Federzungen (21) in der Befestigungsposition ausüben,
- die Federelemente (23) an einem äußeren Durchmesser des Basisrings (24) angeordnet sind.

2. Ein Bildaufnahmesystem (10) nach Anspruch 1, wobei
- die Federzungen (21) in der Befestigungsposition einen Winkel (α) zu einer optischen Achse (15) des Kameramoduls (12) aufweisen, der kleiner als 45° ist.

3. Ein Bildaufnahmesystem (10) nach einem der vorangehenden Ansprüche, wobei
- der Haltering (20) aus einem elektrisch leitenden Material besteht.

4. Ein Bildaufnahmesystem (10) nach Anspruch 3, wobei
- der Haltering (20) eine elektrische Verbindung zwischen dem Kameramodul (12) und dem Kameramontageteil (11) bildet.

5. Ein Bildaufnahmesystem (10) nach Anspruch 3 oder 4, wobei
- das elektrisch leitende Material ein Metall und/oder eine Legierung, vorzugsweise Federstahl, ist.

6. Ein Bildaufnahmesystem (10) nach einem der vorangehenden Ansprüche, wobei
- die Federzungen (21) sich axial zu einer ersten Seite des Halterings (20) erstrecken.

7. Ein Bildaufnahmesystem (10) nach einem der vorangehenden Ansprüche, wobei
- die Federelemente (23) sich axial zu einer zweiten Seite des Halterings (20) erstrecken.

8. Ein Bildaufnahmesystem (10) nach einem der vorangehenden Ansprüche, wobei
- die Enden (22) der Federzungen (21) Rückbiegungen (25) aufweisen, die radial nach außen gerichtet sind.

9. Ein Bildaufnahmesystem (10) nach Anspruch 8, wobei
- in den Rückbiegungen (25) der Enden (22) der Federzungen (21) Rippen (26) vorgesehen sind.

10. Ein Bildaufnahmesystem (10) nach einem der vorangehenden Ansprüche, wobei
- der Haltering (20) einen einteiligen Aufbau aufweist.

11. Ein Bildaufnahmesystem (10) nach einem der vorangehenden Ansprüche, wobei
- der Haltering (20) ein geschlossener Ring ist.

12. Ein Bildaufnahmesystem (10) nach einem der vorangehenden Ansprüche, wobei
- der Haltering (20) als gestanztes Blech ausgebildet ist.

## Revendications

1. Un système d'imagerie (10) pour un véhicule automobile, comprenant :
- une pièce de montage de caméra (11), au moins un module de caméra (12) à monter sur ladite pièce de montage de caméra (11) et un anneau de retenue (20), dans lequel
- le module de caméra (12) est pourvu d'au moins une protubérance (13) dirigée radialement vers l'extérieur,
**caractérisé en ce que**
- l'anneau de retenue (20) comporte plusieurs languettes à ressort déformables élastiquement (21), et
- les languettes à ressort (21) sont disposées sur un diamètre intérieur d'un anneau de base (24) dudit anneau de retenue (20),
- l'anneau de retenue (20) peut être fixé en le poussant sur ladite au moins une protubérance (13) par déformation élastique des languettes à ressort (21) jusqu'à une position de fixation, dans lequel
- lesdites languettes à ressort (21) serrent le module de caméra (12) radialement dans la position de fixation, dans lequel
- les extrémités (22) d'au moins trois languettes à ressort (21) sont axialement adjacentes à une surface (14) de ladite au moins une protubérance (13) dans la position de fixation, et dans lequel
- l'anneau de retenue (20) comporte plusieurs éléments à ressort (23) appliquant une force de ressort axiale de ladite pièce de montage de caméra (11) aux extrémités (22) desdites au moins trois languettes à ressort (21) dans la position de fixation,
- les éléments à ressort (23) sont disposés sur un diamètre extérieur de l'anneau de base (24).

2. Le système d'imagerie (10) selon la revendication 1, dans lequel
- les languettes à ressort (21) font un angle (α) avec un axe optique (15) du module de caméra (12) inférieur à 45° dans la position de fixation.

3. Le système d'imagerie (10) selon l'une quelconque des revendications précédentes, dans lequel
- l'anneau de retenue (20) est constitué d'un matériau conducteur de l'électricité.

4. Le système d'imagerie (10) selon la revendication 3, dans lequel
- l'anneau de retenue (20) forme une connexion électrique entre le module de caméra (12) et la pièce de montage de caméra (11).

5. Le système d'imagerie (10) selon la revendication 3 ou 4, dans lequel
- ledit matériau conducteur de l'électricité est un métal et/ou un alliage, de préférence de l'acier à ressort.

6. Le système d'imagerie (10) selon l'une quelconque des revendications précédentes, dans lequel
- lesdites languettes à ressort (21) s'étendent axialement vers un premier côté de l'anneau de retenue (20).

7. Le système d'imagerie (10) selon l'une quelconque des revendications précédentes, dans lequel
- lesdits éléments à ressort (23) s'étendent axialement vers un second côté de l'anneau de retenue (20).

8. Le système d'imagerie (10) selon l'une quelconque des revendications précédentes, dans lequel
- les extrémités (22) des languettes à ressort (21) présentent des courbures arrière (25) dirigées radialement vers l'extérieur.

9. Le système d'imagerie (10) selon la revendication 8, dans lequel
- des billes (26) sont prévues dans les courbures arrière (25) desdites extrémités (22) des languettes à ressort (21).

10. Le système d'imagerie (10) selon l'une quelconque des revendications précédentes, dans lequel
- l'anneau de retenue (20) est conçu d'une seule pièce.

11. Le système d'imagerie (10) selon l'une quelconque des revendications précédentes, dans lequel
- l'anneau de retenue (20) est un anneau fermé.

12. Le système d'imagerie (10) selon l'une quelconque des revendications précédentes, dans lequel
- l'anneau de retenue (20) est réalisé sous la forme d'une feuille estampée.
